Europäisches Patentamt

European Patent Office

Office européen des brevets

(11) Publication number: **0 210 685**
**A1**

# EUROPEAN PATENT APPLICATION

(21) Application number: 86201157.4

(22) Date of filing: 01.07.86

(51) Int. Cl.⁴: **A01D 34/66 , A01D 34/73**

(30) Priority: 03.07.85 NL 8501910

(43) Date of publication of application:
**04.02.87 Bulletin 87/06**

(84) Designated Contracting States:
**AT BE CH DE FR GB IT LI LU NL SE**

(71) Applicant: **Bouwhuis, Albert**
**No. 1 Kloosterdijk**
**NL-7692 PH Marienberg(NL)**

(72) Inventor: **Bouwhuis, Albert**
**No. 1 Kloosterdijk**
**NL-7692 PH Marienberg(NL)**

(74) Representative: **Schumann, Bernard Herman**
**Johan**
**OCTROOIBUREAU ARNOLD & SIEDSMA**
**Sweelinckplein 1**
**NL-2517 GK The Hague(NL)**

(54) Rotating mowing apparatus.

(57) A mowing apparatus comprises two fixed plates (5,6,7,8), each with a number of teeth (9) provided with cutting edges, a carrying member (17) added to each plate and pressure means (19).

In order to decrease the sensitivity to small disturbing influences and to ensure a very good effectivity of the apparatus with a relatively small power, each carrying member carries a group of at most three knives (18), each knife being supported in such way, that it is hingeable around a hinge line extending substantially in the plane of the cutting edges.

FIG. 1

EP 0 210 685 A1

## Rotating mowing apparatus

The invention relates to a mowing apparatus, comprising:

-at least two fixed plates arranged in one plane in a row extending in transverse direction in relation to the transport direction of the mowing apparatus, said plates each being provided at at least its foremost edge relative to the transport direction, with a number of teeth provided with cutting edges, said teeth having free ends arranged in a arc of a circle;

-acarrying member added to each plate, and rotatably drivable around the centre of said arc of a circle, for carrying at least one knife extending to said arc of a circle, and being provided with a cutting edge that can cuttingly co-operate with said cutting edges of the related plate; and

-pressure means for pressing against each other with a previously chosen force of the or each knife and the related plate.

Such a mowing apparatus is known from GB-A-2.087.705. The mowing apparatus known from this older publication comprises groups of knives consisting from a large number of knives. Each knife is hingeable around a hinge line positioned at a small distance from the cutting edge. As a result of this e.g. a relatively small deposition, such as a grain of sand, particularly at the cutting edge in the area of the hinge line, cause a strongly affected cutting operation, which is not tolerable for a apparatus of the present type.

The invention has for its purpose to decrease this sensitivity to small disturbing influences and furthermore to ensure a very good effectivity of the apparatus with a relatively small power. In this connection the invention proposes to design a mowing apparatus of the type described in such a way that each carrying member carries a group of at most three knives, and in that each knife is supported in such way, that it is hingeable around a hinge line extending substantially in the plane of the cutting edges.

Advantageously use may be made of an embodiment in which the hinge line is positioned at a distance from the free end of the knife, which is at least twice the length of the cutting edge of the knife.

Particularly preference is given to an embodiment in which the hinge line, seen from the knife, is positioned at the opposite side of the centre of the carrying member. It should be understood that that embodiment is a theoretical optimum, in which the hinge line is positioned in the infinite.

In a very simple embodiment the hinge line of a knife is determined by the other knife or the other two knives of a group.

In order to ensure an adjustment to several types of blades to be cut, advantageously the pressure means may be adjustable.

With reference to US-A-2.267.944 and FR-C-1.094.356 it it is noted that in these prior art apparatus the contact places of the co-operating cutting edges of the knives and the cutting edges of the teeth move, in the run-out zone inwardly. The result of this is that, particularly in a case of less sharp cutting edges, cumulations of blades may occur that are at the last point all together smashed, which fosters an early wearing of the apparatus, whilst furthermore cannot be avoided that hard objects, such as stones, are moved inwardly, where they can damage the apparatus.

The invention now proposes to eliminate these undesired phenomena by engineering the mentioned apparatus in such a way that during rotating driving of the carrying member the contact place between the co-operating cutting edges of a knife and a tooth always moves in outward direction. With the mentioned known apparatus it can happen that in case of bending of a cutting edge two cutting edges collide with violence, causing damage and disturbances. In the last-mentioned alternative embodiment of the invention this risk is not present. With this also an excellent self-sharpening effect of the cutting edges is ensured. This self-sharpening effect is fostered by the pressure force in the region of the contact place between the cutting edges of the knives and the teeth.

Advantegeous it that embodiment, in whichthe paths of adjacent knives overlap partly and in a substantial degree, and the knives rotate with the same number of revolutions per minute, and exhibit a phase difference such that they do not touch each other, not even in the area of the overlap.

In this connection it should be noted that from French patent specification FR-C -1.094.356 mentioned already a mowing apparatus is known, in which the paths of adjacent knives partially overlap, the knives rotate with the same number of revolutions per minute and exhibit a phase difference such that they do not touch each other, not even in the area of the overlap. The attention is drawn to the fact that this French publication relates to a mowing apparatus in which the circular path described by the knives extends to only half-way the cutting edges of the teeth. As a result of this it can not be avoided that on the foremost pointed parts of the teeth, that do not get in contact with the knives, cumulations of dirt or other deposits can occur, which may disturb within a relatively short time the good operation of th mowing apparatus in a intolerable manner.

A preferred embodiment exhibits the special feature that the cutting edges of the teeth extend substantially perpendicularly relative to the main plane of the related plate. In this case, namely, both sides of the plates can co-operate with the knives. Each plate can, in that case, be used twice by demounting and remounting in opposite position.

In a comparable way advantageously plates positioned on the same places but on other sides of the centre of the row may be identical. With this configuration such plates may change places.

A further possibility of turning and thus a further doubling of the effective lifetime of each plate is attained with an embodiment in which each plate is engineered in a symmetrical fashion relative to the connection line between the centres of arcs of circles.

A further alternative embodiment exhibits the special feature, that each carrying member is a disc at the side directed to the related fixed plate of which a resilient scraping member is placed for scraping off that plate dirt and other deposits, said scraping member extending up to the cutting edges of the teeth of the plate. Such a scraping member scrapes away dirt or other deposits, such that this is not a position to reach the space under the disc. But for this scraping member the danger would exist, that the deposits gradually accumulate, causing such a force to build up, that the desired pressure force between the plates and the knives is decreased which would affect the good operation of the mowing apparatus. In this connection it is noted that the total force exerted by the resilient scraping members counteracts the force exerted by the pressure means. Therefore it will be obvious that at least the condition should be satisfid, that a net-pressure force is maintained between the knives and the plates.

In the apparatus according to the invention the knives can rotate with a relatively low number of revolutions per minute, despite their little number. It is noted that from NL-A-7.801.408 an apparatus is known, in which discs carrying knives carry only three knives. However, here is question of an apparatus, in which the blades to be mowed are struck off by the very large speed of the knives, whilst in the apparatus according to the invention the blades are cut.

The invention will now be explained with reference to the drawing of a number of embodiments. In the drawing:

fig. 1 is a schematic perspective exploded view of a detail of an apparatus according to the invention;

Fig. 2 is a cross section along the line II-II in fig. 1;

fig. 3 is a cross section through a blade cut through by means of the apparatus according to the invention;

fig. 4 is a view corresponding to fig. 1 of an alternative embodiment;

fig. 5 is the cross section V-V in fig. 4; and fig. 6 is a cross section corresponding with fig. 5 of an alternative embodiment.

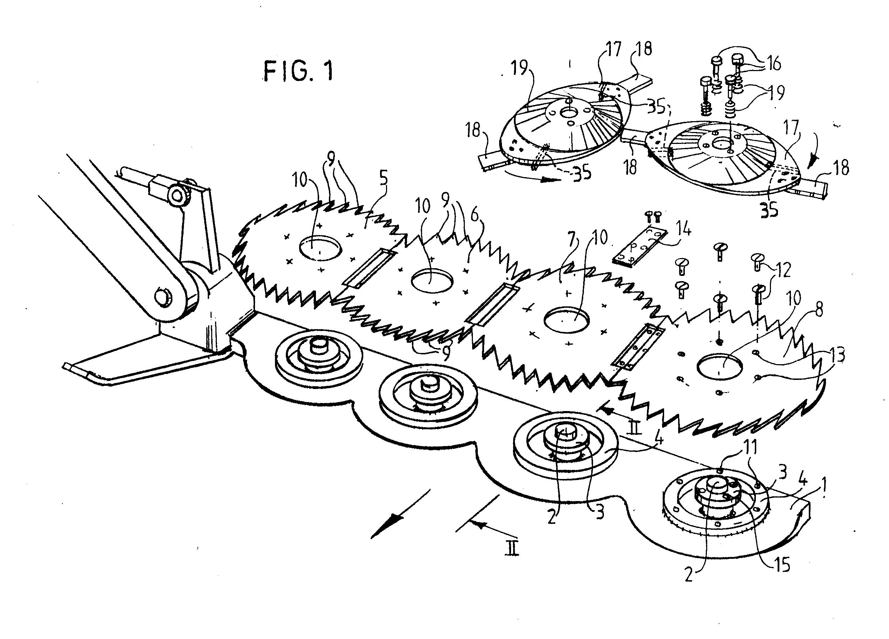

Fig. 1 shows a beam 1, carrying rotatably drivable axels 2 having flanges 3. Coaxially therewith fixed annular raised zones 4 are present for carrying fixed discs 5, 6, 7, 8 provided with teeth 9 to be described more in detail and each a central hole 10. Holes 10 are dimensioned in such a way, that they fit over flanges 3.

Raised parts 4 are provided with holes 11, in which screws 12 can be screwed for fixing through holes 13 fixed discs 5, 6, 7, 8.

Adjacent discs 5, 6, 7, 8 can be coupled by means of plates 14 that can be fixed by screws.

Flanges 3 are also provided with threated holes 15 for, by means of screws 16, fixing discs 17 carrying knives 18. Spiral springs 19 serve the purpose of pushing with a desired pressure of knives 18 against discs 5-8 in the region of teeth 9. By means of the screws 16 the spring pressure of springs 19 can be ajusted.

Resilient scraping members 35 are present under discs 17 and serve the purpose of scraping off the dirt and other deposits of the plates 5. These scraping members 35 extend up to teeth 9.

It will be clear that, in the case in which dirt or other deposits, such as zand, is present between a knife 18 and a plate 5, 6, 7, 8, the related knife will make a hinge movement, in which the knife present at the other side is going to act as hinge centre.

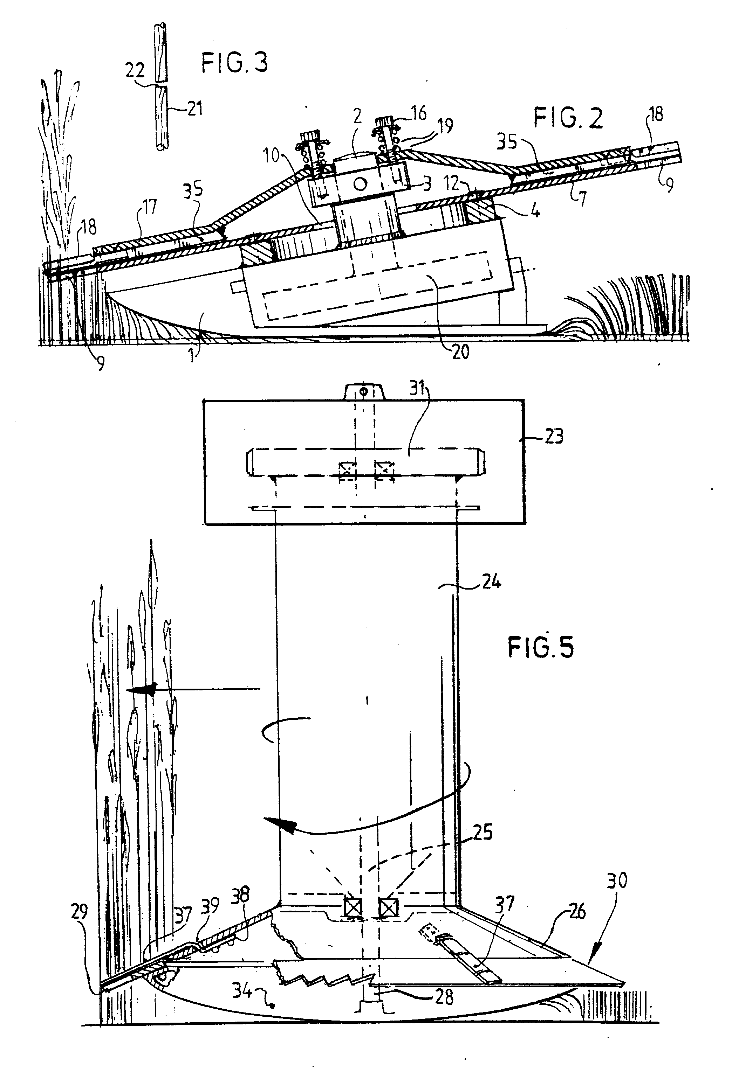

Fig. 2 shows this clearly. This figure - schematically shows a driving apparatus 20 with a frame drawn in interrupted lines.

Furthermore it is clear from fig. 2, that the discs 5, 6, 7, 8 are arranged more or less declined in forward directions, and that beam 1 is provided with a sole raising a little in forward direction.

Fig. 3 shows a blade 21 with a cut 22 made by means of the apparatus according to figs. 1 and 2. From this figure it appears that the upper end of the lower part of the blade is cut sharply and is further mechanically undamaged.

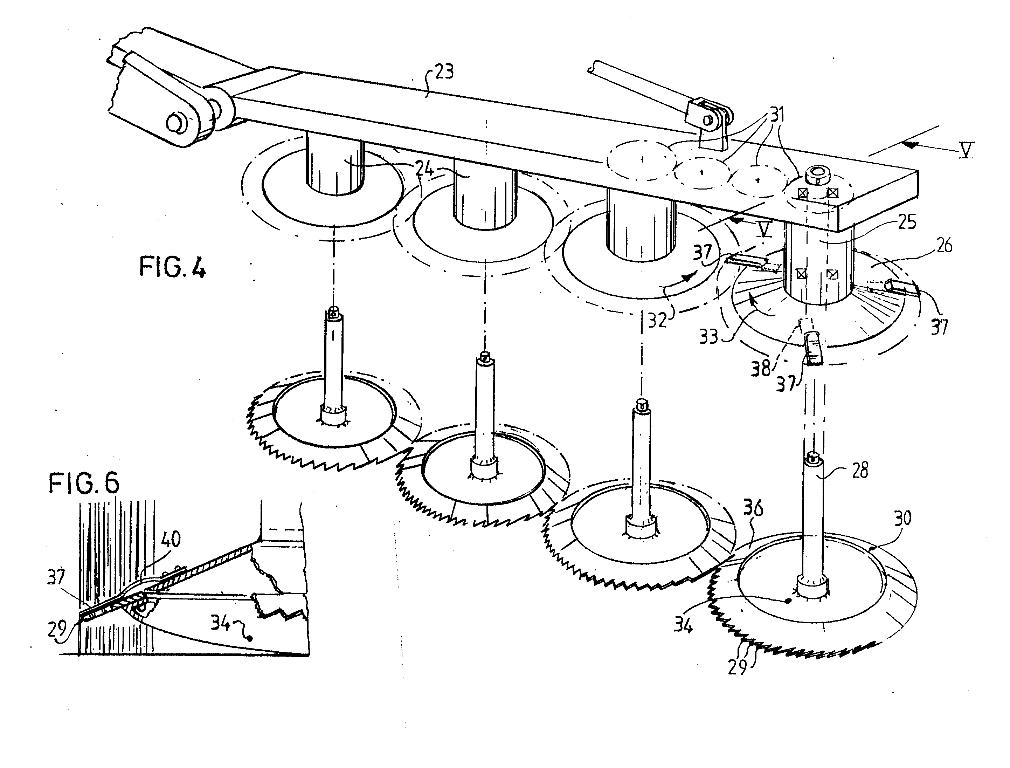

Fig. 4 shows a beam 23 having drums 24 fixed to it. Driving axels 25 carry thus rotatably drivable discs 26 provided with teeth 27. Through fixed axels 28 discs 30 provided with peripheral zones 36 having teeth 29, each having the shape of a truncated cone, are fixed under beam 23. The stationary teeth 29 co-operate with the rotatably drivable knives 37.

As also fig. 5 shows, each fixed plate 34 comprises a peripheral zone 36 carrying the teeth 29 and having the shape of a truncated cone. Knives 37 press resiliently on teeth 29 by each being carried by biased resilient strip 38 extending through a hole 39 in a disc 36 and fixed at the lower surface thereof.

The attention is drawn to the fact that, if dirt or other deposit is present between the truncated-cone-shaped peripheral zone 36 and a knife 37, this knife will make a hinge-movement around a hinge line present in the zone of hole 39.

Schematically interrupted lines show transmission gearings 31. They are driven by not-shown driving means. As shown with arrows 32 and 33 respectively, adjacent discs 26 are rotating with opposite rotating senses and with such a phase difference, that in the zone, in which the parts of the respective knives overlap, these knives do not touch each other.

From fig. 1 it will be clear that discs 5, 6, 7, 8 are interchangeable. In this connection it should be noted that discs 5 and 8 and 6 and 7 respectively are identical, but in the configuration they are placed in a different position. From this fact it will be clear that the four discs can take four different positions by turning around and interchanging places respectively. In view thereof teeth 9 are provided with a cutting edge at their upper surfaces as well as their lower surfaces. It will be clear that the quadruple usability is advantageous for the total lifetime. As a result of the self-sharpening effect also the time, within which knives 18 maintain a sufficient sharpness, can be referred to as very good.

Fig. 6 shows an alternative embodiment, in which knives 37 are each carried by a biased resilient strip 14 having a curved shape and is fixed at the upper surface of disc 26. In this construction a knife 37 can be replaced more easily than in the embodiment according to fig. 5. On the other hand, in the varient according to fig. 6 there is a greater risk of picking up and accumulating dirt, blades and other deposits on strips 40.

Knives 37, in this alternative embodiment, are hingeable arou nd a hinge line entending in the region of the fixation point of curved strip 40 on disc 26.

In an embodiment, in which the plates consist of a wear-resistant e.g. reinforced synthetic resin, preferably the cutting edges of the teeth extend in a perpendicular direction on the main plane of the related plate. As a result of this the wearing of the cutting edges is relatively little.

## Claims

1. Mowing apparatus, comprising:

-at least two fixed plates arranged in one plane in a row extending in transverse direction in relation to the transport direction of the mowing apparatus, said plates each being provided at at least its foremost edge relative to the transport direction, with a number of teeth provided with cutting edges, said teeth having free ends arranged in a arc of a circle;

- a carryingmember added to each plate, and rotatably drivable around the centre of said arc of a circle, for carrying at least one knife extending to said arc of a circle, and being provided with a cutting edge that can cuttingly co-operate with said cutting edges of the related plate; and

-pressure means for pressing against each other with a previously chosen force of the or each knife and the related plate,

characterized in that

each carrying member carries a group of at most three knives, and in that each knife is supported in such way, that it is hingeable around a hinge line extending substantially in the plane of the cutting edges.

2. Mowing apparatus according to claim 1,

characterized in that the hinge line is positioned at a distance from the free end of the knife, which is at least twice the length of the cutting edge of the knife.

3. Mowing apparatus according to claim 2, characterized in that the hinge line, seen from the knife, is positioned at the opposite side of the centre of the carrying member.

4. Mowing apparatus according to claim 3, characterized in that the hinge line of a knife is determined by the other knife or the other two knives of a group.

5. Mowing apparatus according to anyone of the preceding claims, characterized in that the pressure means are adjustable.

6. Mowing apparatus according to anyone of the preceding claims, characterized in that during rotating driving of the carrying member the contact place between the co-operating cutting edges of a knife and a tooth always moves in outward direction.

7. Mowing apparatus according to anyone of the preceding claims, characterized in that the paths of adjacent knives overlap partly and in a substantial degree, and the knives rotate with the same number of revolutions per minute, and exhibit a phase difference such that they do not touch each other, not even in the area of the overlap.

8. Mowing apparatus according to anyone of the preceding claims, characterized in that the cutting edges of the teeth extend substantially perpendicularly relative to the main plane of the related plate.

9. Mowing apparatus according claim 8, characterized in that the plates are made from synthetic resin.

10. Mowing apparatus according to anyone of the preceding claims, characterized in that each carrying member is a disc at the side directed to the related fixed plate of which a resilient scraping member is placed for scraping off that plate dirt and other deposits, said scraping member extending up to the cutting edges of the teeth of the plate.

FIG. 1

0 210 685

FIG.3

FIG.2

FIG.5

FIG.4

FIG.6

0 210 685

**EUROPEAN SEARCH REPORT**

Application number

EP 86 20 1157

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,D | US-A-2 267 944 (OSTERHOLM)<br>* Page 1, right-hand column, lines 15-38; page 2, left-hand column, lines 39-44; figure 1 * | 1-5,8 | A 01 D 34/66<br>A 01 D 34/73 |
| A | | 7 | |
| | --- | | |
| Y | GB-A-1 258 419 (VAN DER LELY)<br>* Page 2, lines 87-105; figure 3 * | 1-5,8 | |
| | --- | | |
| D,A | GB-A-2 087 705 (MAUCH)<br>* Page 2, lines 93-96; page 3, lines 89-91; page 4, lines 98-102; figures 6,11,12,14 * | 1,7 | |
| | --- | | TECHNICAL FIELDS SEARCHED (Int. Cl.4) |
| A | FR-A-2 228 414 (INTERNATIONAL HARVESTER)<br>* Page 5 * | 1 | A 01 D |
| | --- | | |
| A | FR-A-1 440 389 (ZWEEGERS)<br>* Page 2, right-hand column, line 56 - page 3, left-hand column, line 10; page 3, right-hand column, lines 35-47; figures 1,4 * | 1,7,8 | |
| | --- | | |
| A | US-A-2 697 323 (HORN)<br>* Whole document * | 1,2 | |
| | ---     -/- | | |

The present search report has been drawn up for all claims

| Place of search | Date of completion of the search | Examiner |
|---|---|---|
| THE HAGUE | 07-10-1986 | DE LAMEILLIEURE D. |

## DOCUMENTS CONSIDERED TO BE RELEVANT

Page  2

| Category | Citation of document with indication, where appropriate, of relevant passages | Relevant to claim | CLASSIFICATION OF THE APPLICATION (Int. Cl.4) |
|---|---|---|---|
| A | EP-A-0 057 936  (LESSLHUMER)<br>* Page 16, paragraph 3; figure 11 * | 6 | |
| A | NL-A-7 409 898  (MULTINORM)<br>* Page 5, line 18 - page 6, line 3 * | 1,2,5 | |
| D,A | NL-A-7 801 408  (VICON)<br>* Whole document * | 1,7,8 | |
| A | FR-A-1 523 440  (GUILLOTIN)<br>* Whole document * | 10 | |
| A | US-A-3 452 524  (GUETTERMAN) | | |
| A | US-A-3 321 894  (INGRAM) | | |
| A | US-A-2 875 569  (SAUER) | | |
| A | FR-A-2 496 404  (VAN DER LELY) | | |

TECHNICAL FIELDS
SEARCHED (Int. Cl.4)

The present search report has been drawn up for all claims

| Place of search | Date of completion of the search | Examiner |
|---|---|---|
| THE HAGUE | 07-10-1986 | DE LAMEILLIEURE D. |